# FASCICULE DE BREVET EUROPEEN

(11) **EP 0 542 965 B1**
(45) Date de publication et mention de la délivrance du brevet: **08.05.1996**
(21) Numéro de dépôt: 92911690.3
(22) Date de dépôt: 04.06.1992
(51) Int. Cl.: A23L 1/308, A23L 1/0534, A23L 1/0522, A23D 9/00

(54) **PARTICULE UTILE COMME SUCCEDANE DE GLOBULE GRAS LAITIER, COMPOSITION LES CONTENANT, ET PROCEDE DE PREPARATION**
ALS MILCHFETTKOERPERCHENERSATZ VERWENDBARES KOERPERCHEN, DESSELBEN ENTHAELTENDE ZUSAMMENSTELLUNG, UND VERFAHREN ZUR HERSTELLUNG DESSELBEN
PARTICLE FOR USE AS A MILK FAT GLOBULE SUBSTITUTE, COMPOSITION CONTAINING SAME AND PROCESS FOR THE PREPARATION OF SAID PARTICLE

(30) Priorité: 04.06.1991 FR 9106744
(43) Date de publication de la demande: 26.05.1993
(73) Titulaire: BIOVECTOR THERAPEUTICS SA, F-31520 Ramonville-Saint-Agne (FR)
(72) Inventeur: SAMAIN, Daniel, F-31400 Toulouse (FR); GIBILARO, Joelle, F-31400 Toulouse (FR)
(74) Mandataire: Warcoin, Jacques
(86) Numéro de dépôt international: FR9200497
(87) Numéro de publication internationale: WO9221251

(56) Documents cités:
- EP-A- 0 109 776
- EP-A- 0 388 572
- GB-A- 1 423 608
- US-A- 3 539 551

## Description

La présence invention concerne la synthèse de succédanés allégés de matières grasses utilisables pour de nombreuses applications des matières grasses et notamment en tant que substitut dans les produits alimentaires.

Dans un régime alimentaire équilibré, les lipides doivent fournir de 28 à 30 % de l'apport énergétique quotidien nécessaire au bon fonctionnement de l'organisme, les glucides dits "lents" fournissant pour leur part 50 % de l'apport énergétique. Or, dans les pays industrialisés, on constate un déséquilibre des constituants de la ration journalière et un excès d'apport lipidique, cet apport étant de l'ordre de 42 %. L'excès de lipides, provoqué notamment par la forte consommation d'aliments d'origine animale riches en graisses, entraîne diverses conséquences néfastes pour la santé, allant de la surcharge pondérale aux maladies cardiovasculaires, facteur majeur de morbidité.

Le pouvoir calorique de la matière grasse pure est élevé (9Kcal/g). Une des solutions permettant de réduire ce pouvoir calorique dans des produits riches en lipides est de supprimer la fraction lipidique. Cependant, d'un point de vue qualités organoleptiques, la matière grasse joue un rôle primordial, non seulement au niveau de la texture du produit (fluidité, onctuosité) mais aussi et surtout au niveau de l'arôme.

La matière grasse est en effet capable de solubiliser des composés lipophiles tels que des composés arômatiques et d'en exalter les propriétés organoleptiques.

On a donc recherché des substituts de matières grasses, qui idéalement, devraient satisfaire aux quatre conditions suivantes :
- apporter une valeur calorique (métabolisable) nettement inférieure à celle d'un corps gras,
- présenter des caractéristiques physico-chimiques et rhéologiques comparables à celles du corps gras à remplacer,
- présenter des performances organoleptiques satisfaisantes,
- présenter un caractère d'innocuité et ne pas entraîner d'effets secondaires désagréables.

Différents substituts des matières grasses ont déjà été proposés. Ces produits appartiennent à plusieurs catégories. On trouve ainsi des ingrédients protéiques qui comprennent des émulsifiants et des agents liants ; les amidons sont également utilisés comme agents de substitution des matières grasses, notamment au sein de sauces on peut également citer les polyesters de sucrose et les gélifiants ; enfin les hydrogels et les hydrocolloïdes polysaccharidiques constituent une autre classe de produits de substitution des matières grasses.

EP 388 572 décrit des particules pouvant être utilisées comme substitut de matières grasses, qui comprennent un noyau solide sur lequel sont greffées des chaînes hydrocarbonées.

Tous ces produits ont été élaborés pour tenter de redonner aux produits maigres, la texture d'aliments non dégraissés. Ils présentent cependant un nombre plus ou moins grand d'inconvénients. Certains ne sont utilisables que pour des aliments ne nécessitant pas de chauffage ; certains posent des problèmes de toxicité, ou entraînent des effets secondaires indésirables ; dans tous les cas, les qualités organoleptiques sont généralement très peu satisfaisantes, avec en particulier l'absence ou une très mauvaise reproduction de l'arôme.

C'est pourquoi la présente invention a pour objet une particule utile notamment comme succédané de matière grasse, caractérisée en ce qu'elle comporte une matrice hydrophile insoluble, entourée d'une couche hydrophobe d'acides gras liés à la matrice par des liaisons covalentes et pouvant interagir avec des composés lipidiques ou amphiphiles.

Plus particulièrement, la présente invention à pour objet une particule utile notamment comme succédané de matière grasse, caractérisé en ce qu'elle comporte une matrice hydrophile insoluble, entourée d'une première couche hydrophobe d'acides gras liés à la matrice par des liaisons covalentes, et d'une seconde couche formée de composés lipidiques ou amphiphiles.

La matrice hydrophile insoluble peut provenir notamment d'un produit naturellement insoluble ou insolubilisé par voie physique ou chimique, notamment par réticulation. Cette matrice hydrophile est de préférence un polysaccharide. Un tel polysaccharide est biocompatible, et les processus d'insolubilisation sont biocompatibles.

Les propriétés lipophiles de la première couche d'acides gras lui permettent d'interagir par des liaisons hydrophobes avec des composés lipidiques ou amphiphiles.

La couche d'acides gras est établie autour de la périphérie de la matrice hydrophile par une réaction entre les dérivés des acides gras et les matrices hydrophiles dans un non solvant de la matrice hydrophile ce qui permet de limiter la réaction uniquement à la surface de la matrice hydrophile.

Bien que limitée à la surface, la couche d'acides gras présente des propriétés de lipophilie qui permettent d'interagir par des liaisons hydrophobes avec d'autres composés lipidiques ou amphiphiles.

Ces particules peuvent entrer dans une composition utile comme succédané de matière grasse.

Ces particules sont notamment utiles comme succédané de globule gras laitier.

Une telle composition reproduit l'apparence de la structure de la matière grasse, ce qui représente un avantage considérable par rapport aux succédanés de matière grasse déjà décrits.

En effet, les matières grasses se présentent soit sous forme d'une émulsion huile dans eau, caractérisée par un continuum aqueux soit sous forme d'une émulsion eau dans huile, caractérisée par un continuum lipidique.

Dans le système huile dans eau, la matière grasse est présente sous forme de globules de quelques micromètres de diamètre et constitués d'un noyau de triglycérides entouré par des agents émulsifiants, phospholipides ou protéines. L'exemple naturel le plus commun est le globule gras du lait.

La majeure partie de l'apport calorique des globules gras est fournie par le noyau central de triglycérides tandis que les propriétés organoleptiques sont fournies par les composés de la couche externe en contact avec les cellules spécialisées au niveau buccal.

Dans le système eau dans huile, la matière grasse est présente sous la forme d'un continuum huileux incluant une phase aqueuse. Ces émulsions dites inverses sont stabilisées par des agents émulsifiants phospholipides ou protéines. L'exemple naturel le plus connu est le beurre.

Les huiles pures représentent le cas extrême des continuums lipidiques où la phase aqueuse est totalement absente.

Il est relativement facile de diminuer la teneur en lipides d'une émulsion eau dans huile en augmentant la proportion d'eau.

La perte de stabilité qui en résulte est compensée par l'incorporation dans la phase aqueuse d'agent épaississant.

Le produit final acquiert cependant une saveur aqueuse relativement déplaisante.

Les propriétés organoleptiques d'une émulsion eau dans huile dépendent donc de sa teneur en huile.

Le maintien des qualités organoleptiques dans une préparation eau dans huile allégée implique ainsi non pas d'augmenter le pourcentage d'eau mais de substituer une partie de l'huile par un produit aux propriétés analogues mais faiblement calorique.

Les particules entrant dans les compositions selon l'invention ont un rôle de substitution du noyau interne des globules gras et un rôle de substitution d'une partie de l'huile dans les préparations à continuum lipidique.

Les triglycérides du noyau interne et du continuum lipidique sont remplacés par une matrice hydrophile particulaire de petite taille constituée de préférence par un polysaccharide insoluble et recouvert par une couche lipidique d'acides gras.

Ces matrices présentent ainsi des propriétés externes de lipophilie alors que leur composition globale due surtout à leur partie interne polysaccharidique est hydrophile.

Au cours de la digestion, les particules vont être soumises à l'action d'enzymes qui vont libérer les acides gras greffés sur le noyau polysaccharidique. La proportion relative d'acides gras périphériques par rapport au poids total de la particule est très faible et l'apport lipidique considérablement réduit ce qui est essentiel pour les sujets devant suivre un régime pauvre en graisse.

La contribution calorique du noyau polysaccharidique est modulée par le choix du composé à partir duquel il est préparé.

Ce composé peut notamment être choisi parmi les amidons naturels, le dextrane, la cellulose, les carraghénanes et les gels de polysaccharides obtenus par un agent réticulant.

L'amidon peut par exemple provenir du riz, du maïs, du tapioca, etc... et se trouve naturellement insoluble. L'amidon, assimilable par l'organisme, fournit un apport calorique supérieur à celui obtenu pour un polysaccharide peu ou non dégradable, comme la cellulose.

La structure de la matrice polysaccharidique est variable en fonction des applications recherchées. Cette matrice sert de support à une couche superficielle, constituée d'acides gras qui peuvent interagir avec des composés amphiphiles pour former une membrane ou avec des composés lipidiques pour former un continuum hydrophobe.

Cette membrane, tant par la nature et le nombre de ces composés que par le type d'ancrage de ces derniers sur la matrice polysaccharidique, imite la membrane qui entoure les vésicules lipidiques lorsque la matière grasse se présente sous forme de globules dispersés dans une phase aqueuse. Le rôle de la membrane étant essentiel, ces succédanés sont ainsi capables de reproduire toutes les qualités organoleptiques de la matière grasse sous forme d'émulsion huile/eau.

La teneur en huile étant essentielle dans le continuum hydrophobe, les succédanés sont également capables de reproduire toutes les qualités de la matière grasse, sous forme d'émulsion eau/huile.

Les acides gras sont greffés sur la matrice par des liaisons esters, à un taux dépendant de la densité des fonctions hydroxyles à la surface de ladite matrice.

Ces acides gras sont saturés ou insaturés et sont choisis de préférence parmi les acides gras naturels. On utilise en général des acides gras ayant une chaîne de longueur variant entre C8 et C18.

La densité des fonctions hydroxyles périphériques est déterminée par la cohésion et la structure de la matrice polysaccharidique.

Une matrice très dense conduit donc à une couche lipidique également dense. A l'inverse, une matrice peu cohérente conduit à une couche lipidique peu dense.

Une couche lipidique plus dense conduit à la formation de liaisons hydrophobes plus importantes entre les couches lipidiques. On peu donc ainsi moduler la composition de la membrane périphérique selon le type d'utilisation envisagée.

De préférence, les agents amphiphiles de la seconde couche appartiennent au groupe comprenant les phospholipides et les protéines.

De préférence, les agents lipidiques du continuum hydrophobe appartiennent au groupe des triglycérides.

La présente invention a également pour objet un procédé de préparation de particules entrant dans une composition utile comme succédané de matière grasse, caractérisé en ce que :
a) on prépare une matrice hydrophile d'une taille de l'ordre du micromètre, à partir de gel polysaccharidique insoluble, naturellement ou chimiquement réticulée,
b) on greffe chimiquement sur les fonctions hydroxyles à la surface de la matrice, une première couche lipidique, de manière à obtenir une matrice acylée,
c) on forme une seconde couche de composés amphiphiles par création de liaisons hydrophobes avec la première couche lipidique, ou
d) alternativement, on disperse les matrices acylées dans une phase lipidique continue.

Dans un des modes de mise en oeuvre du procédé selon l'invention, la matrice hydrophile, dans l'étape a), est préparée par traitement thermique, broyage et homogénéisation d'amidons naturels et/ou de cellulose, naturellement réticulée.

L'utilisation de polysaccharides naturellement insolubles permet de diminuer le coût de fabrication. En effet, ces matières premières ont un prix de revient relativement faible et peuvent être traitées directement. Par exemple, l'amidon sera mis en suspension aqueuse par chauffage à 100°C, puis rincé pour éliminer les éléments polysaccharidiques solubles et soumis au broyage.

Dans un autre mode de mise en oeuvre du procédé selon l'invention, la matrice hydrophile, dans l'étape a) est préparée par réticulation de polysaccharides.

Il est toutefois très important que la réticulation soit effectuée par un agent conduisant après réticulation à une matrice biocompatible. De tels agents réticulants sont connus de l'homme de métier et sont constitués par exemple d'oxychlorure de phosphate ou de dérivé de di ou tri acide carboxylique.

Les amidons, naturellement insolubles ou chimiquement réticulés, sont dilués dans de l'eau et broyés mécaniquement à l'aide d'un broyeur à hélices permettant d'obtenir des matrices de quelques dizaines de micromètres de diamètre. On obtient une suspension fluide, homogène, qui est ensuite fragmentée de façon plus importante à l'aide d'un homogénéisateur haute pression. On obtient ainsi des particules sphéroïdes de diamètre moyen de l'ordre du micromètre.

Des particules polysaccharidiques de plusieurs tailles peuvent être obtenues. En règle générale, plus la pression d'homogénéisation est grande, plus la taille des particules est petite.

De manière générale, la matrice hydrophile est constituée de particules ayant un diamètre compris entre 0,5 et 10µm, et de préférence d'environ 1µm.

La première couche lipidique est de préférence formée par un acide gras ou un mélange d'acide gras.

L'acylation des matrices polysaccharidiques, à l'étape b) peut se faire par des réactions de greffage. Ces réactions doivent cependant être conduites dans des conditions où l'on ne puisse pas introduire de résidus toxiques de solvant ou de catalyseur.

L'un des objets de la présente invention est de fournir un procédé de préparation de particules dans lequel la synthèse de la couronne d'acides gras de l'étape b) est réalisée par réaction dans du CO₂ supercritique, c'est-à-dire dans des conditions de température et de pression telles que le gaz ne peut être liquéfié par simple compression.

Les particules obtenues à l'issue de l'étape b) sont particulièrement utiles pour des applications agro-alimentaires.

Les acides gras sont greffés autour des matrices par des liaisons covalentes de type ester. Le taux d'acides gras est variable. L'établissement d'un ensemble d'acides gras plus ou moins dense varie en fonction de la stoechiométrie des composants et de la durée de la réaction.

On obtient ainsi des couches lipidiques ayant une fluidité spécifique et induisant des propriétés organoleptiques particulières.

La mise en place, autour des acides gras, d'une seconde couche de composés amphiphiles lors de l'étape c), peut s'effectuer par hydratation progressive d'un mélange des matrices acylées et des composés amphiphiles, puis passage à haute pression dans un homogénéisateur, ce qui permet aux composés de s'organiser autour des matrices.

La dispersion de noyaux acylés dans une phase huileuse lors de l'étape d) peut s'effectuer par mélange des noyaux acylés, avec la phase huileuse et passage à haute pression dans un homogénéisateur, ce qui permet d'obtenir une dispersion maximale des noyaux acylés, en rompant les liaisons hydrophobes pouvant exister entre les noyaux acylés.

Toute une serie de succédanés peut être synthétisée, de composition variant entre ces deux cas limites :
Le premier cas concerne une faible réticulation entraînant une faible densité d'acides gras. On a alors un fort degré d'hydratation de la matrice et une faible cohésion entre la couche lipidique et les composés amphiphiles ou les lipides du continuum huileux. Le pouvoir calorique de ce succédané est extrêmement faible.

Dans le second cas, on a une forte réticulation et une forte densité d'acides gras greffés. Le degré d'hydratation de la matrice est faible. Une couronne lipidique épaisse rend la particule acylée très hydrophobe. Les forces de tension superficielle générées entraînent l'adhésion forte de la couche amphiphile qui a précisément pour fonction de diminuer cette tension. La cohésion entre la couche lipidique et les composés amphiphiles ou les lipides du continuum huileux est forte ; le pouvoir calorique est plus important.

Les compositions selon l'invention peuvent avoir une seconde couche constituée par des composés amphiphiles provenant du lait.

Selon un autre aspect de l'invention, les lipides du continuum huileux peuvent être formés de composés lipidiques provenant d'une huile naturelle comestible.

Les compositions selon l'invention peuvent se présenter sous forme liquide, pâteuse ou solide.

Selon le mode de réalisation particulier choisi, les compositions selon l'invention peuvent être utilisées telles quelles, sous forme de pâtes à tartiner par exemple. Elles peuvent aussi entrer dans des produits allégés, aussi bien des produits laitiers à continuum aqueux (yaourts, fromage, lait fermenté), que des produits à continuum huileux comme par exemple la mayonnaise.

D'autres applications des compositions selon l'invention englobent des produits alimentaires comme les glaces, le chocolat, les confiseries, la charcuterie ou les plats cuisinés.

La présente invention concerne également une particule, telle qu'elle peut être notamment obtenue à l'issue de l'étape b) du procédé selon l'invention, caractérisée en ce qu'elle comporte une matrice hydrophile naturellement insoluble ou chimiquement réticulée entourée d'une couche hydrophobe d'acides gras naturels liés à la matrice par des liaisons covalentes.

Les exemples suivants sont destinés à illustrer l'invention.

### EXEMPLE 1 : PREPARATION DE PARTICULES POLYSACCHARIDIQUES A PARTIR D'AMIDONS NATURELS

1 kg d'amidon naturel (riz, tapioca, maïs...) est mis en suspension dans de 5 litres d'eau à 100°C pendant 20 minutes.

L'amidon est filtré, rincé avec deux litres d'eau à 80°C puis dispersé dans 5 litres d'eau. On effectue ensuite un prébroyage avec un broyeur à hélice (puissance : 150 W) pendant cinq minutes.

La suspension est ensuite homogénéisée à haute pression à 100, 200 et 300 bars (Rannie INDUSTRY) à une vitesse de circulation de 100 l/h.

La suspension homogénéisée est enfin atomisée dans une tour d'atomisation (model Nyro, débit 4 litres/heure) à des températures d'entrée et de sortie respectivement de 200 et 100°C.

### EXEMPLE 2 : PREPARATION DE PARTICULES POLYSACCHARIDIQUES AVEC UTILISATION D'UN AGENT RETICULANT

Dans un réacteur on mélange, à l'aide d'une pale à rotation planétaire entraînée par un moteur, 1 kg d'amidon avec 2700 ml d'eau distillée et 300 ml de soude 10 N. Le réacteur est refroidi de façon à travailler à basse température (environ 5° C).

6,17 ml de POCl₃ et 210 ml de NaOH sont ensuite injectés goutte à goutte. La durée totale d'introduction de ces deux réactifs est de deux heures.

Le gel est ensuite dilué et neutralisé avec de l'acide chlorhydrique.

Le gel est ensuite lavé à l'eau chaude à 90°C pendant trois heures dans une essoreuse.

Le gel est ensuite prébroyé à l'aide d'un appareil à hélice (puissance : 400 W), pendant une heure.

Le gel est récupéré, dilué dans 10 litres d'eau, puis homogénéisé à 100, 200, 300, 400 et 500 bars à 80 litres/heures (Rannie INDUSTRY).

La suspension homogénéisée est atomisée dans une tour d'atomisation (Nyro) à des températures d'entrée et de sortie de 240 et 100°C. Le débit de pompage est de 4 litres/heure.

### EXEMPLE 3 : PREPARATION DE PARTICULES POLYSACCHARIDIQUES ACYLEES DANS UNE UNITE CO₂ SUPER CRITIQUE

1 kg de particules polyssacharidiques obtenu selon l'exemple 1, est placé à l'état de poudre sèche dans un réacteur en acier émaillé de 3 litres muni d'un agitateur mécanique. Le réacteur est fermé par un couvercle étanche à 100 bars et le réacteur est connecté au circuit de CO₂ super critique et pressurisé à 90 bars et maintenu à 80°C.

On introduit alors dans le réacteur, au moyen d'une pompe, 10 g de chlorure d'acide palmitique et la réaction est poursuivie pendant une heure jusqu'à ce que pratiquement tout le chlorure d'acide soit consommé.

Le réacteur est ensuite balayé par un courant de CO₂ pour entraîner les petites quantités de sous produits formées : acide palmitique, acide chlorhydrique, chlorure d'acide palmitique n'ayant pas réagit.

Le CO₂ chargé en acide palmitique et en acide chlorhydrique est purifié d'abord par un cycle de détente qui permet de condenser l'acide palmitique et par passage sur une cartouche de Na₂CO₃ pour piéger l'acide chlorhydrique.

Le CO₂ purifié est ensuite recomprimé et recyclé dans le réacteur.

Lorsque tous les sous produits réactionnels ont été éliminés, le réacteur est dépressurisé.

On obtient 1,04 kg de poudre de particules polysaccharidiques acylées pure.

Le taux d'acide gras greffé est mesuré après saponification : les matrices acylées sont dispersées dans du dichlorométhane, de la soude et du méthanol dans les proportions 2/2/6. L'ensemble est agité pendant cinq jours. Un dosage est effectué par HPLC. Le taux d'acides gras mesuré est de 0,8 % par rapport au poids de matrices.

### EXEMPLE 4 : ANCRAGE DES CONSTITUANTS PROTEIQUES ET PHOSPHOLIPIDIQUES DU BABEURRE

1 kg de poudre polysaccharidique acylée, préparée selon l'exemple 3, est mélangée à l'état sec avec 100 g de poudre de babeurre.

Le mélange est maintenu à 40°C. et hydraté progressivement sous agitation. On ajoute ainsi 5 litres d'eau. Lorsque le mélange est bien hydraté, on homogénéise par passage dans un homogénéisateur à 80 litres/heure et à 100 bars.

On obtient 5 litres d'une préparation crémeuse ne contenant presque plus de babeurre à l'état libre : deux témoins sont effectués avec du babeurre seul. Un témoin babeurre et la préparation sont centrifugés. On mesure le taux de protéines, par la méthode de Bradford, dans le témoin non centrifugé, dans le surnageant du témoin centrifugé et dans le surnageant de la préparation. Les analyses sont effectuées sur 100 ml. On mesure 1,8 g de protéines dans le témoin non centrifugé, 1,6 g dans le surnageant du témoin centrifugé et 0,18 g dans le surnageant de la préparation. On déduit de ces résultats la quantité de protéines présente dans le centrifugeat du témoin babeurre soit 0,8 g et par la suite la quantité de protéines ancrée sur les particules acylées soit 0,82 g. Le pourcentage de protéines ancrées est de 45,6 % par rapport à la quantité de protéines introduites initialement.

### EXEMPLE 5 : ANCRAGE DES CONSTITUANTS PROTEIQUES ET PHOSPHOLIPIDIQUES DE LA MATIERE GRASSE LAITIERE A LA SURFACE DE PARTICULES POLYSACCHARIDIQUES ACYLEES

1 kg de poudre polysaccharidique acylée préparée selon l'exemple 3 est mélangée à l'état sec dans 10 litres de lait entier non homogénéisé.

L'ensemble est homogénéisé à 200 bars à une vitesse de 80 l/h.

Deux témoins sont effectués avec du lait entier seul. On mesure le taux de protéines, par la méthode de Bradford comme dans l'exemple 4, dans le témoin non centrifugé, dans le surnageant du témoin centrifugé et dans le surnageant de la préparation. Le calcul donne une quantité de protéines ancrées sur les particules acylées de 0,9 %, par rapport au poids de particules.

D'autre part, le centrifugeat de la préparation est séché puis lavé par filtration avec du chloroforme de façon à extraire les lipides et les phospholipides. Le chloroforme est ensuite évaporé et l'on pèse les lipides et les phospholipides restant. La mesure donne 15 g pour 1 kg de poudre polysaccharidique initiale.

### EXEMPLE 6 : PREPARATION MAYONNAISE

On introduit, dans un récipient, un jaune d'oeuf. On procède ensuite, sous agitation vigoureuse à l'aide d'un batteur, à l'addition progressive de 20 g de noyaux acylés selon l'exemple 3 et 20 g d'huile.

### EXEMPLE 7: INCORPORATION D'UN SUCCEDANE DE MATIERE GRASSE DANS DU LAIT ECREME

30 g de succédané de matière grasse préparé selon l'exemple 5, sont incorporés, sous agitation mécanique faible, dans 1 litre de lait écrémé chauffé à 50°C.

### EXEMPLE 8 : ENCAPSULATION D'UN ARÔME : LA VANILLINE

100 g de particules acylées préparées selon l'exemple 3 sont ajoutés à 5 g de vanilline et à 5 g de lécithine de jaune d'oeuf (Fluka) dissous dans 100 ml d'éthanol. L'éthanol est évaporé sous pression réduite à l'évaporateur rotatif pour donner 107 grammes de poudre fine de vanilline encapsulée. 10 grammes de cette poudre sont ensuite hydratés progressivement par 100 ml d'eau et la suspension résultante est homogénéisée (Rannie, Minilab) à 100 bars pendant 5 minutes. La suspension laiteuse est ensuite centrifugée à 1000 g pendant 10 minutes pour sédimenter les particules, et la vanilline est dosée par CLPH dans le surnageant limpide. On trouve une quantité de 0,1 gramme de vanilline libre soit un rendement d'encapsulation de 80 % de vanilline.

## Revendications

1. Particule utile notamment comme succédané de matière grasse, caractérisée en ce qu'elle comporte une matrice hydrophile insoluble, entourée d'une première couche hydrophobe d'acides gras liés à la matrice par des liaisons covalentes et d'une seconde couche formée de composés lipidiques ou amphiphiles.

2. Particule selon la revendication 1, caractérisée en ce que la matrice hydrophile est constituée par un polysaccharide naturellement insoluble, ou chimiquement ou physiquement insolubilisé.

3. Particule selon la revendication 2, caractérisée en ce que la matrice hydrophile insoluble est préparée à partir d'un composé choisi parmi les polysaccharides naturels insolubles, la cellulose, les amidons naturels, le dextranes, les carraghénanes et les gels de polysaccharides solubles rendus insolubles par réticulation chimique.

4. Particule selon l'une des revendications 1 à 3, caractérisée en ce que les acides gras sont liés à la matrice par une fonction de type ester.

5. Particule selon la revendication 4, caractérisée en ce que les acides gras sont greffés par estérification sur les fonctions hydroxyles de la matrice .

6. Particule selon l'une des revendications 1 à 5, caractérisée en ce que les acides gras sont choisis parmi les acides gras naturels.

7. Particule selon l'une des revendications 1 à 6, caractérisée en ce que les agents amphiphiles de la seconde couche appartiennent au groupe comprenant les phospholipides et les protéines.

8. Particule selon l'une des revendications 1 à 7, caractérisée en ce que les agents amphiphiles de la seconde couche sont choisis parmi les constituants du lait.

9. Procédé de préparation de particules selon l'une des revendications 1 à 8, caractérisé en ce que :
a) on prépare une matrice hydrophile, d'une taille de l'ordre du micromètre, naturellement ou chimiquement réticulée, par un procédé biocompatible,
b) on greffe chimiquement dans des conditions biocompatibles sur les fonctions hydroxyles à la surface de la matrice une première couche lipidique, de manière à obtenir une matrice acylée.

10. Procédé selon la revendication 9, caractérisé en ce que, dans l'étape a), la matrice hydrophile est préparée par traitement thermique, broyage et homogénéisation d'amidons naturels et/ou de cellulose naturellement réticulée.

11. Procédé selon la revendication 9, caractérisé en ce que, dans l'étape a), la matrice hydrophile est préparée par réticulation chimique de polysaccharide.

12. Procédé selon l'une des revendications 9 à 11, caractérisé en ce que la première couche lipidique est formée par un acide gras ou un mélange d'acides gras naturels.

13. Procédé selon l'une des revendications 9 à 12, caractérisé en ce que l'étape b) est effectuée par une réaction non catalytique en présence de chlorures d'acides, et dans du CO₂ supercritique.

14. Procédé selon l'une des revendications 9 à 13, caractérisé en ce qu'après l'étape b), on procède à une étape c) dans laquelle on forme une seconde couche de composes amphiphiles, par création de liaisons hydrophobes avec la première couche lipidique.

15. Procédé selon l'une des revendications 9 à 13, caractérisé en ce qu'après l'étape b), on procède à une étape c), dans laquelle on disperse les matrices acylés dans une phase lipidique continue.

16. Procédé selon l'une des revendications 14 et 15, caractérisé en ce que l'étape c) est réalisée par mélange des constituants et passage à haute pression.

17. Particule susceptible d'être obtenue à l'issue de l'étape b) du procédé selon l'une des revendications 9 à 13, caractérisée en ce qu'elle comporte une matrice hydrophile insoluble, entourée d'une couche hydrophobe d'acide gras liés à la matrice par des liaisons covalentes et pouvant interagir avec des composés lipidiques ou amphiphiles.

18. Composition utile comme succédané de matière grasse contenant des particules selon la revendication 17, et susceptible d'être par le procédé selon l'une des revendications 15 et 16, caractérisée en ce que les particules sont entourées d'une seconde couche formée de composés lipidiques.

19. Composition selon la revendication 18, caractérisée en ce que les composés lipidiques de la seconde couche sont des constituants d'une huile naturelle comestible.

20. Composition utile comme succédané de matière grasse, caractérisée en ce qu'elle contient des particules selon l'une des revendications 1 à 8.

21. Composition selon l'une des revendications 18 à 20, caractérisée en ce qu'elle se présente sous forme liquide, pâteuse ou solide.

22. Composition selon l'une des revendications 18 à 21, caractérisée en ce que les particules ont un diamètre compris entre 0,5 et 10 micromètres, et de préférence d'environ 1 micromètre.

## Claims

1. Particle which is useful especially as fat substitute, characterized in that it comprises an insoluble hydrophilic matrix surrounded by a first hydrophobic layer of fatty acids linked to the matrix via covalent bonds, and by a second layer consisting of lipid or amphiphilic compounds.

2. Particle according to Claim 1, characterized in that the hydrophilic matrix consists of a naturally insoluble, or a chemically or physically insolubilized polysaccharide.

3. Particle according to Claim 2, characterized in that the insoluble hydrophilic matrix is prepared from a compound chosen from insoluble natural polysaccharides, cellulose, natural starches, dextrans, carrageenans and soluble polysaccharide gels made insoluble by chemical cross-linkage.

4. Particle according to one of Claims 1 to 3, characterized in that the fatty acids are linked to the matrix via an ester type functional group.

5. Particle according to Claim 4, characterized in that the fatty acids are grafted by esterification onto the hydroxyl functional groups of the matrix.

6. Particle according to one of Claims 1 to 5, characterized in that the fatty acids are chosen from natural fatty acids.

7. Particle according to one of Claims 1 to 6, characterized in that the amphiphilic agents of the second layer belong to the group comprising phospholipids and proteins.

8. Particle according to one of Claims 1 to 7, characterized in that the amphiphilic agents of the second layer are chosen from milk constituents.

9. Process for preparing particles according to one of Claims 1 to 8, characterized in that:
a) a hydrophilic matrix, of the order of one micrometre in size, naturally or chemically cross-linked, is prepared by a biocompatible process,
b) a first lipid layer is grafted chemically, under biocompatible conditions, onto the hydroxyl functional groups at the surface of the matrix so as to obtain an acylated matrix.

10. Process according to Claim 9, characterized in that in step a), the hydrophilic matrix, naturally crosslinked, is prepared by heat treatment, grinding and homogenizing natural starches and/or cellulose.

11. Process according to Claim 9, characterized in that in step a), the hydrophilic matrix is prepared by chemical cross-linkage of polysaccharide.

12. Process according to one of Claims 9 to 11, characterized in that the first lipid layer is formed by a fatty acid of a mixture of natural fatty acids.

13. Process according to one of Claims 9 to 12, characterized in that step b) is carried out by non-catalytic reaction in the presence of acid chlorides and in supercritical CO₂.

14. Process according to one of Claims 9 to 13, characterized in that after step b), step c) is carried out in which a second layer of amphiphilic compounds is formed by establishing hydrophobic bonds with the first lipid layer.

15. Process according to one of Claims 9 to 13, characterized in that after step b), step c) is carried out in which the acylated matrices are dispersed in a continuous lipid phase.

16. Process according to one of Claims 14 and 15, characterized in that step c) is performed by mixing the constituents and treating at high pressure.

17. Particle obtainable at the end of step b) of the process according to one of Claims 9 to 13, characterized in that it comprises an insoluble hydrophilic matrix surrounded by a hydrophobic layer of fatty acid linked to the matrix via covalent bonds and capable of interacting with lipid or amphiphilic compounds.

18. Composition which is useful as fat substitute, containing particles according to Claim 17, and obtainable by the process according to one of Claims 15 and 16, characterized in that the particles are surrounded by a second layer consisting of lipid compounds.

19. Composition according to Claim 18, characterized in that lipid compounds of the second layer are the constituents of a natural edible oil.

20. Composition which is useful as fat substitute, characterized in that it contains particles according to one of Claims 1 to 8.

21. Composition according to one of Claims 18 to 20, characterized in that it is provided in liquid, pasty or solid form.

22. Composition according to one of Claims 18 to 21, characterized in that the particles have a diameter of between 0.5 and 10 micrometres, and preferably about 1 micrometre.

## Patentansprüche

1. Partikel, insbesondere verwendbar als Fettersatz, dadurch charakterisiert, daß sie eine unlösliche hydrophile Matrix umfaßt, die umgeben ist von einer ersten hydrophoben Schicht aus Fettsäuren, die durch kovalente Bindungen an die Matrix gebunden sind, und von einer zweiten Schicht, die aus Lipidverbindungen oder amphiphilen Verbindungen gebildet ist.

2. Partikel entsprechend Anspruch 1, dadurch charakterisiert, daß die hydrophile Matrix aufgebaut ist aus einem von Natur aus unlöslichen oder einem chemisch oder physikalisch unlöslich gemachten Polysaccharid.

3. Partikel entsprechend Anspruch 2, dadurch charakterisiert, daß die unlösliche hydrophile Matrix hergestellt wird ausgehend von einer Verbindung, ausgewählt aus natürlichen unlöslichen Polysacchariden, Cellulose, natürlichen Stärken, Dextran, Carrageenanen und löslichen Polysaccharid-Gelen, die durch chemische Vernetzung unlöslich gemacht wurden.

4. Partikel entsprechend einem der Ansprüche 1 bis 3, dadurch charakterisiert, daß die Fettsäuren durch eine funktionelle Gruppe von Estertyp an die Matrix gebunden sind.

5. Partikel entsprechend Anspruch 4, dadurch charakterisiert, daß die Fettsäuren durch Veresterung auf die funktionellen Hydroxylgruppen der Matrix aufgepfropft sind.

6. Partikel nach einem der Ansprüche 1 bis 5, dadurch charakterisiert, daß die Fettsäuren aus den natürlichen Fettsäuren ausgewählt werden.

7. Partikel nach einem der Ansprüche 1 bis 6, dadurch charakterisiert, daß die amphiphilen Mittel der zweiten Schicht zur Phospholipide und Proteine umfassenden Gruppen gehören.

8. Partikel nach einem der Ansprüche 1 bis 7, dadurch charakterisiert, daß die amphiphilen Mittel der zweiten Schicht aus Bestandteilen der Milch ausgewählt werden.

9. Verfahren zur Herstellung der Partikel nach einem der Ansprüche 1 bis 8, dadurch charakterisiert, daß
a) man eine hydrophile Matrix einer Größe im Bereich von Mikrometern, natürlich oder chemisch vernetzt, durch ein biokompatibles Verfahren herstellt,
b) man chemisch unter biokompatiblen Bedingungen eine erste Lipidschicht auf die funktionellen Hydroxylgruppen an der Oberfläche der Matrix aufpfropft, um eine acylierte Matrix herzustellen.

10. Verfahren nach Anspruch 9, dadurch charakterisiert, daß in Schritt a) die hydrophile Matrix durch thermische Behandlung, Mahlen und Homogenisieren natürlicher Stärken und/oder natürlich vernetzter Cellulose hergestellt wird.

11. Verfahren entsprechend Anspruch 9, dadurch charakterisiert, daß in Schritt a) die hydrophile Matrix durch chemische Vernetzung von Polysaccharid hergestellet wird.

12. Verfahren nach einem der Ansprüche 9 bis 11, dadurch charakterisiert, daß die erste Lipidschicht aus einer Fettsäure oder einer Mischung natürlicher Fettsäuren gebildet wird.

13. Verfahren nach einem der Ansprüche 9 bis 12, dadurch charakterisiert, daß Schritt b) durch eine nicht-katalytische Reaktion in Gegenwart von Säurechloriden und in überkritischem CO₂ durchgeführt wird.

14. Verfahren nach einem der Ansprüche 9 bis 13, dadurch charakterisiert, daß nach Schritt b) ein Schritt c) folgt, in dem eine zweite Schicht aus amphiphilen Verbindungen durch Bildung hydrophober Bindungen mit der ersten Lipidschicht gebildet wird.

15. Verfahren nach einem der Ansprüche 9 bis 13, dadurch charakterisiert, daß man nach Schritt b) einen Schritt c) durchführt, in dem man die acylierten Matrices in einer kontinuierlichen Lipidphase dispergiert.

16. Verfahren nach einem der Ansprüche 14 und 15, dadurch charakterisiert, daß Schritt c) durch Mischen der Bestandteile und Einwirkung von hohem Druck durchgeführt wird.

17. Partikel, erhältlich nach Durchführung von Schritt b) des Verfahrens nach einem der Ansprüche 9 bis 13, dadurch charakterisiert, daß sie eine unlösliche hydrophile Matrix umfaßt, die umgeben ist von einer hydrophoben Schicht aus Fettsäuren, die an die Matrix durch kovalente Bindungen gebunden sind und die mit Lipidverbindungen oder amphiphilen Verbindungen Wechselwirkungen zeigen können.

18. Zusammensetzung, die als Fettersatz einsetzbar ist, enthaltend Partikel nach Anspruch 17, erhältlich durch ein Verfahren nach einem der Ansprüche 15 und 16, dadurch charakterisiert, daß die Partikel mit einer zweiten Schicht umgeben sind, die aus Lipidverbindungen aufgebaut ist.

19. Zusammensetzung nach Anspruch 18, dadurch charakterisiert, daß die Lipidverbindungen der zweiten Schicht Bestandteile eines natürlichen Speiseöls sind.

20. Zusammensetzung, die als Fettersatz einsetzbar ist, dadurch charakterisiert, daß sie Partikel nach einem der Ansprüche 1 bis 8 enthält.

21. Zusammensetzung nach einem der Ansprüche 18 bis 20, dadurch charakterisiert, daß sie in flüssiger, pastöser oder fester Form vorliegt.

22. Zusammensetzung nach einem der Ansprüche 18 bis 21, dadurch charakterisiert, daß die Partikel einen Durchmesser im Bereich von 0,5 bis 10 µm aufweisen, bevorzugt etwa 1 µm.
